# EUROPEAN PATENT SPECIFICATION

(11) **EP 3 189 733 B1**
(45) Date of publication and mention of the grant of the patent: **30.09.2020**
(21) Application number: 16382005.3
(22) Date of filing: 07.01.2016
(51) Int. Cl.: A21C 1/00, A21C 1/02, A21C 1/14, A47J 43/046, B01F 3/08, B01F 7/16, B01F 15/00

(54) **METHOD FOR THE TREATMENT OF DOUGH AND FOOD EMULSIONS**
VERFAHREN ZUR BEHANDLUNG VON TEIG UND NAHRUNGSMITTELEMULSIONEN
PROCÉDÉ POUR LE TRAITEMENT DE PÂTE ET ÉMULSIONS ALIMENTAIRES

(43) Date of publication of application: 12.07.2017
(73) Proprietor: Taurus Research and Development, SLU, 25790 Oliana (Lleida) (ES)
(72) Inventor: TRENCH ROCA, Lluís, 08650 Sallent (ES); MARTINEZ MARTÍ, David, 25790 Oliana (ES); ALET VIDAL, Josep, 25790 Oliana (ES)
(74) Representative: Juncosa Miró, Jaime

(56) References cited:
- EP-A1- 1 731 068
- WO-A1-2014/162679
- US-A- 4 541 573

## Description

### Technical Field

The present invention relates to a method for the treatment of dough and food emulsions which comprises stirring a dough or emulsion for a certain time, in a vessel using a stirring apparatus provided with paddles and/or blades attached to a rotary shaft connected to a stirring motor, such as an electric motor, with or without heating of the dough/emulsion.

The method of the invention can particularly be applied, by means of the indicated equipment, to the treatment of highly thick and sticky dough, such as for example the mixture used for preparing French meringue (egg white with sugar), said mixture causing the electric motor to suffer considerably as the paddles and/or blades rotate in said mixture, and wherein the projection of said mixture against the inner wall of the vessel must be minimized to prevent it from sticking to said wall and not going back to the treatment area, being left untreated or insufficiently treated.

### Background of the Invention

Patent document JP-A-04148635 discloses a method for preparing bread dough by stirring the raw materials of the dough (wheat flour, yeast, salt, sugar and butter) and carrying out the stirring process by intermittently rotating and stopping the stirring means.

Patent document EP-B1-0966909 discloses a food processor for preparing yeast dough and the like with a stirring vessel and a for a stirring mechanism in which the problem of high load and overheating conditions to which the operating motor, such as an electric motor, is subjected is dealt with for preparing the mentioned dough, for example for preparing bread dough. This patent proposes for that purpose standstill or stop phases of the electric motor which are preferably three times longer than the activation phases of the mentioned electric motor for stirring the dough, such that the dough to be stirred can stand and the electric motor during these standstill phases can recover from heating, said electric motor furthermore being subjected to active cooling during said stop phases by means of a cooling fan.

Patent document US-A-4541573 discloses a food processor comprising a motor for rotating a rotor, a read-only memory and a key input portion. In the read-only memory, a plurality of processing data is stored in advance. Each of the processing data includes a plurality of data groups consisting of speed data for determining the rotational speed of the motor and time data for determining the operation time of the motor. By operation of the key input portion, an arbitrary processing data is selected out of the plurality of processing data and the data groups included in the selected processing data are outputted successively from the read-only memory. According to these data groups, operation of the motor is controlled so that food is automatically processed.

The present invention proposes a method according to claim 1 for the treatment of dough and emulsions of different kinds, particularly highly thick and sticky dough and emulsions in which it is necessary to assure that all the ingredients or all the dough is effectively beat by the active elements on same (paddles and/or blades) and to prevent a considerable part of the material forming the dough from sticking during treatment to the walls of the vessel, and hence being left untreated, operating for that purpose by means of rotating stages of only one fraction or several fractions of a turn, interrupted by stop periods having a predetermined duration, generally less than the rotation time, and operating in any case at low speeds, i.e., with an average speed of the paddles and/or blades in the order of 5 and 80 rpm. This minimizes the mentioned projection of the dough against the walls and assures that all the dough is beat by paddles and/or blades during treatment.

### Disclosure of the Invention

To solve the problem described and to allow the treatment of highly thick and sticky dough and emulsions by means of a rotary stirring apparatus provided with paddles and/or blades attached to a shaft connected to an electric stirring motor, the present invention essentially proposes a control of the mentioned electric motor depending on the position of the mentioned paddles and/or blades and not by time, and it furthermore works using phases in which rotation is interrupted, each of which rotations generally consists of only one fraction or several fractions of a turn.

The mentioned method is implemented by means of a stirring apparatus provided with paddles and/or blades attached to a rotary shaft connected to an electric stirring motor, and comprises intermittent stirring phases followed by intermittent stop phases. According to the proposal of this invention, said method characteristically comprises controlling the operation of the motor depending on the angular position of the mentioned rotary paddles and/or blades, so that:
- the shaft carrying the mentioned paddles and/or blades describes in each of the stirring phases an angle of rotation having a predetermined amplitude, advantageously less than or equal to 720 degrees (two complete turns), and
- the combined stirring and stop phases occur between 1 and 5 times per second, and preferably between 1 and 2 times per second,
the actuation of said paddles and/or blades causing a repeated beating of the dough or emulsion in its entirety during treatment, in each stirring phase, and minimizing the amount of dough projected against the wall of the vessel by centrifugal force, when the shaft carrying the paddles and/or blades barely completes generally one or two turns.

Therefore, although a rotation exceeding two turns is contemplated as being possible according to the principles of this invention, it is estimated that the method can achieve or allows achieving efficient treatment of said highly thick and sticky dough and emulsions with only one or more fractions of a rotation without completing a full rotation or with one rotation and one or more fractions of a rotation without completing two turns. In other words, in order to apply a treatment of the dough or emulsion, according to a preferred embodiment of the proposed method the amplitude of the angle of rotation in each stirring phase is selected between values comprising a fraction of a complete turn, or a complete turn plus a fraction of a turn.

The duration of the stop phase will generally be a predetermined, pre-established value which can be variable and which will generally be less than the rotation time of the paddles and/or blades, and this value is generally controlled by time, i.e., once a stop time is established, or once a stop time profile through the phases is established, it is stored in a control circuit.

In any case, unlike the proposals disclosed in the aforementioned prior art, the method of the present invention applied to another type of dough is always implemented at low speeds such that the average speed of the paddles and/or blades will be comprised between 5 and 80 rpm, and advantageously between 5 and 40 rpm.

In a preferred embodiment, motor operation control is performed by means of an angular position sensor (for example a Hall sensor) detecting the position of an element (for example a magnet with a pole pair or with several pole pairs angularly equispaced from one another) that can be perceived by said sensor which is linked to a rotary shaft (for example the shaft of the motor) or another shaft of the kinematic chain to the shaft carrying the paddles and/or blades by means of the actuation of said motor. A control circuit providing power regulation of the electric motor in the range of 0% to 100% during said stirring phase is furthermore used in response to the signals received from the mentioned angular position sensor.

The duration of the stirring phases is therefore determined by the position detected by said angular position sensor of the element that can be perceived by the sensor, linked to the rotary shaft.

In one embodiment, the mentioned motor used to provide rotary motion to the stirring paddles and/or blades is an electric motor powered with alternating current, and the mentioned control is performed by means of a control circuit integrating a TRIAC-type semiconductor device.

Alternatively, said motor used to provide rotary motion to the stirring paddles and/or blades is an electric motor powered with direct current, and a control circuit integrating a power transistor-type semiconductor device is used for the mentioned control.

Furthermore, in a possible embodiment it has been envisaged that the duration of the stop phases is adjusted depending on the current consumed by the electric motor, in any one of the two aforementioned control implementations.

The method can be implemented with different variants such that:
- the amplitude of the angle of rotation of the paddles and/or blades has a common value in all the stirring phases, and the duration of the stop phases is common or variable;
- the amplitude of the angle of rotation of the paddles and/or blades is variable in all the stirring phases, and the duration of the stop phases is common or variable.

The described method for the treatment of the dough or food emulsion is fully compatible with providing heating of said dough by heating means for heating at least one portion of the bottom of the vessel during a step of the treatment or throughout all of said treatment.

### Brief Description of the Drawings

The foregoing and other features and advantages of the invention will be better understood based on the following detailed description of embodiments provided with a merely illustrative and non-limiting character in reference to the attached drawings, in which:

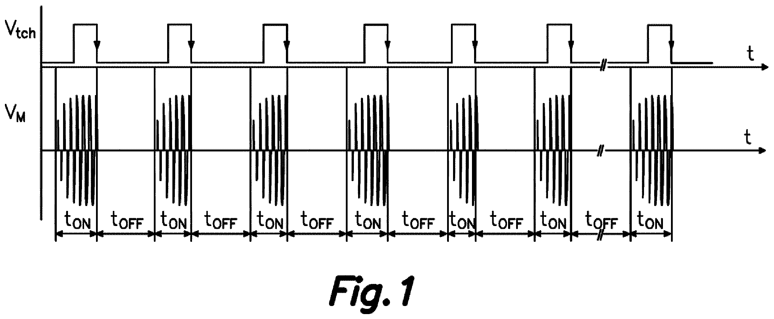

Figure 1 illustrates by means of a graph (the voltage applied to the motor is shown on the Y-axis, and time is shown on the X-axis) a possible implementation of a rotation control strategy of the rotary shaft carrying the paddles and/or blades of a stirring device, according to the described principles of the invention, wherein:
   - V_{tch} indicates the voltage response signal (step pulses) of a sensor, such as a Hall sensor in relation to a magnet (with one pole pair or more pole pairs) in the mentioned shaft, or in a shaft of the kinematic chain between the shaft of the motor
   - and the shaft carrying the mentioned paddles and/or blades, and
   - V_{M} indicates the voltage in the form of alternating current applied to the motor,
Figure 2 is equivalent to the preceding figure, but in this case the voltage response signal V_{tch} of the sensor comprises two pulses. The area indicated by means of a circle III is enlarged in Figure 3.
Figure 3 shows (area with lines in the curve V_{M}) the power transmitted to the motor as a result of the proposed rotation control strategy of the shaft carrying the paddles and/or blades, in response to the signal provided by the sensor, in relation to Figure 2, i.e., it is an enlargement of the voltage curve indicated in circle III of said Figure 2.
Figures 4 and 5 are equivalent to Figures 1 and 2, but with different values of energy transferred to the electric motor in each activation phase (stirring of the dough or emulsion) of the motor, depending on the voltage response signal of the sensor (3 or more pulses).
Finally, Figure 6 shows an example of a device for stirring a dough or emulsion indicating the rotation operation means for paddles and the control means used to implement the method of the invention.

### Detailed Description of the Embodiments

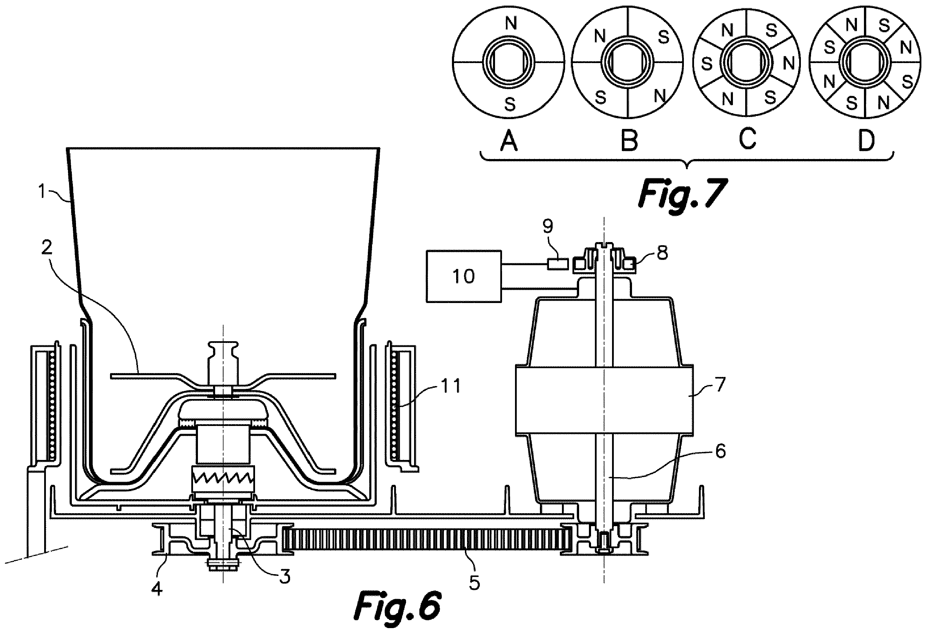

In reference to Figure 6, said drawing shows a vessel 1 provided for containing a dough or emulsion, at the bottom of which there are stirring paddles attached to a shaft 3 having a driven pulley 4 therein which, by means of a transmission belt 5, receives a torque from the shaft 6 (having a driving pulley therein) of an electric motor 7. A magnet 8 is connected at a free end of the mentioned shaft 6 of the electric motor 7. The mentioned magnet can include one pole pair like in the example indicated with the letter A of Figure 6, or four poles (letter B), six poles (letter C) or eight poles (letter D), such that by means of a Hall-type sensor 9 it is possible to detect a fraction of a turn having an amplitude of 180 degrees, 90 degrees, 60 degrees or 45 degrees, according to the magnet used.

Said Figure 6 furthermore schematically shows in a box a control circuit 10 which will implement control of the energy supplied to the electric stirring motor 7 based on the signal provided by the sensor according to the graphs of Figures 1 to 5 for example.

If the electric stirring motor 7 is powered with alternating current, the mentioned control is performed by means of a control circuit integrating one or more TRIAC-type semiconductor devices, whereas if said electric stirring motor 7 is an electric motor powered with direct current, the mentioned control will be performed by means of a control circuit in which there is one or more power transistor-type semiconductor devices (e.g. MOSFET transistors). The control circuit or circuits for providing a regulated power supply using TRIACs or power transistors will not be described in detail herein as they are well-known by the skilled person in the art.
Figures 1, 2 and 4, 5 show graphs in which the voltage impulse is depicted in the upper part (in this case it is a step signal or impulse) generated in the sensor 9 for each detection of the magnet; the trailing edge is indicated with an arrow because said edge is what is used to stop the voltage supply, and hence power supply to the operating motor 7 during rotation of the shaft 3 carrying the paddles and/or blades 2. Therefore in Figure 1, the motor stops after a single impulse generated by a first detection of the magnet 8 by the sensor 9, and depending on the type of magnet 8 (A to C, for example), said detection will correspond to an larger or smaller rotation amplitude, respectively, of the mentioned shaft 3. Figure 1 shows that the stop time t_{OFF} in this example lasts slightly longer than the operation or activation time of the electric motor 7, t_{ON}.

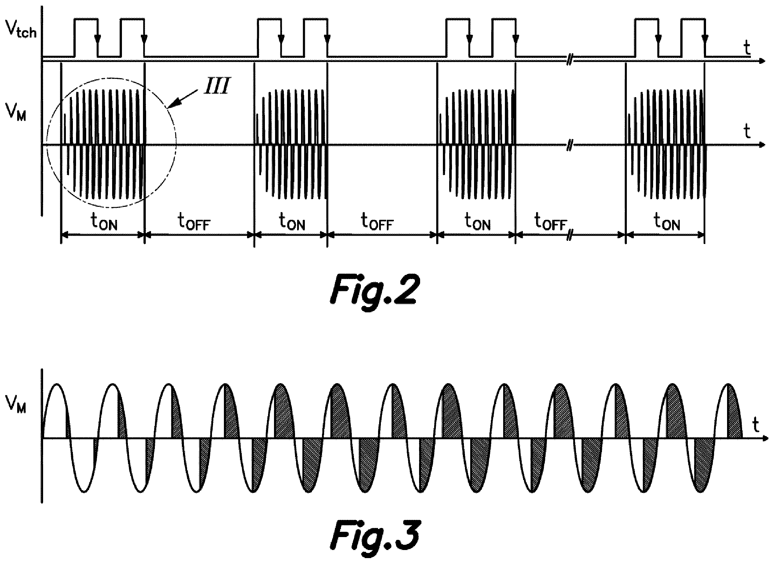

In the example of Figure 2, the motor stops after detection of the magnet 8 passing in front of the sensor 9 twice, generating two impulses, and the progression of the voltage curve, which is enlarged in Figure 3, is indicated in said Figure 2 by means of a circle, showing therein the transfer of power (area with lines between the curve and the X-axis, indicative of time, t). In this case, like in Figure 1, the stop time t_{OFF} of this example lasts slightly longer than the operation or activation time of the electric motor 7, t_{ON}.

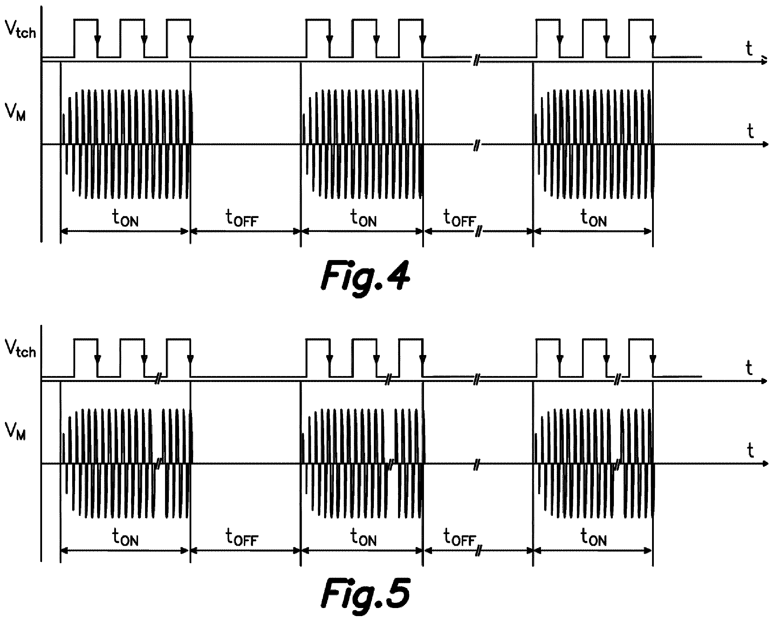

In Figure 4, the motor stops after the magnet passes in front of the sensor three times, generating three impulses, and in this example it is seen that the stop time t_{OFF} lasts substantially less than the operation or activation time of the electric motor 7, t_{ON}.

Finally, Figure 5 shows an embodiment in which the number of times the magnet passes in front of the sensor exceeds three times (see the fragmented horizontal line), and in this example the stop time t_{OFF} lasts substantially less than the operation or activation time of the electric motor 7, t_{ON}.

As shown in the indicated examples, it is seen that the method proposed by the invention will allow various implementations in which the activation periods of the electric motor depicted in the graphs by the voltage curves demarcated by t_{ON} can have a common or variable duration (for example activating the motor after counting a number of passes during a first cycle and a different number in a second cycle and later cycles) and be followed by stop times also indicated by t_{OFF} having an equal or variable duration; however what is characteristic in any of the variants of implementation is that motor operation control is performed in all cases depending on the position of the mentioned paddles and/or blades, and that the stopping of such paddles and/or blades occurs after one or more fractions of a turn which can cover a complete turn or two turns in a preferred embodiment, even contemplating an extension to more turns, but in no case involving the possibility of the paddles and/or blades projecting a significant amount of treated dough against the walls of the vessel.

Generally, the stop time t_{OFF} will have a predetermined duration, and even though it is variable, it could be memorized in a memory of the control circuit. However, the invention also contemplates the possibility that the duration of the stop phases can be adjusted depending on the current consumed by the motor.

Furthermore, the working of the described method means that the mentioned paddles and/or blades rotate at low speeds or at a slow speed (in relation to the typical operation of a stirring device) such that the average speed is comprised between 5 and 80 rpm and advantageously between 5 and 30 rpm.

Figure 6 furthermore shows heating means 11 for heating by induction the vessel in which the dough or emulsion is being treated, although the method can be applied both with heating and without it, and particularly also by intercalating heating phases having a predetermined duration, combined with controlled amplitude rotation and stop phases of the paddles and/or blades.

## Claims

1. A method for the treatment of dough and food emulsions, which comprises stirring a dough or emulsion in a vessel (1) by means of a rotary stirring apparatus provided with blade paddles and/or blades (2) attached to a shaft (3) connected to a stirring motor, comprising intermittent stirring phases followed by intermittent stop phases, wherein it comprises controlling the operation of the motor depending on the position of the mentioned paddles and/or blades (2), so that:
- the shaft (3) carrying the mentioned paddles and/or blades (2) describes in each of the stirring phases an angle of rotation having a predetermined amplitude, less than or equal to 720 degrees, two complete turns, and
- the combined stirring and stop phases occur between 1 and 5 times per second,
the actuation of said paddles and/or blades (2) causing a repeated beating of the dough or emulsion during treatment, in each stirring phase, and minimizing the amount of dough projected against the wall of the vessel (1) by centrifugal force.

2. The method according to claim 1, wherein the amplitude of the angle of rotation in each stirring phase is selected between values comprising a fraction of a complete turn, or a complete turn plus a fraction of a turn.

3. The method according to claim 1, wherein said motor is an electric motor (7) and said motor operation control is performed by means of an angular position sensor (9) detecting the position of an element (8) that can be sensed by the sensor (9), linked to a rotary shaft (6) by means of the actuation of said motor, and a control circuit (10) providing a power regulation of the electric motor (7) in a range of 0% to 100% during said stirring phase in response to the signals received from the mentioned angular position sensor (9).

4. The method according to claim 1, wherein the duration of the stirring phases is determined by the position detected by said angular position sensor (9) of the element (8) that can be perceived by the sensor, linked to the shaft (6).

5. The method according to claim 1, wherein the average speed of the paddles and/or blades (2) is comprised between 5 and 80 rpm.

6. The method according to claim 1, wherein the amplitude of the angle of rotation of the paddles and/or blades (2) is common in all the stirring phases.

7. The method according to claim 1, wherein the amplitude of the angle of rotation of the paddles and/or blades (2) is common in all the stirring phases and the duration of the stop phases is also common.

8. The method according to claim 1, wherein the amplitude of the angle of rotation of the paddles and/or blades (2) is common in all the stirring phases and the duration of the stop phases is variable.

9. The method according to claim 1, wherein the amplitude of the angle of rotation of the paddles and/or blades (2) is variable in all the stirring phases and the duration of the stop phases is common.

10. The method according to claim 1, wherein the amplitude of the angle of rotation of the paddles and/or blades (2) is variable in all the stirring phases and the duration of the stop phases is also variable.

11. The method according to claim 1, wherein said stirring motor is an electric motor (7) powered with alternating current, and the mentioned control is performed by means of a control circuit (10) integrating a TRIAC-type semiconductor device.

12. The method according to claim 1, wherein said stirring motor is an electric motor (7) powered with direct current, and the mentioned control is performed by means of a control circuit (10) integrating a power transistor-type semiconductor device.

13. The method according to claim 1, wherein the duration of the stop phases is adjusted depending on the current consumed by the motor.

14. The method according to claim 1, wherein heating is applied to the dough or food emulsion during the treatment thereof by heating means (11) for heating at least one portion of the bottom of the vessel (1).

## Patentansprüche

1. Verfahren zur Behandlung von Teig und Nahrungsmittelemulsionen, welches das Rühren eines Teigs oder einer Emulsion in einem Behälter (1) mittels einer rotierenden Rührvorrichtung umfasst, die mit Schaufelpaddeln und/oder Schaufeln (2) versehen ist, die an einer mit einem Rührmotor verbundenen Welle (3) befestigt sind, umfassend intermittierende Rührphasen, gefolgt von intermittierenden Stoppphasen, wobei es die Steuerung des Betriebs des Motors in Abhängigkeit von der Position der genannten Paddel und/oder Schaufeln (2) umfasst, so dass:
- die Welle (3), die die genannten Paddel und/oder Schaufeln (2) trägt, in jeder der Rührphasen einen Rotationswinkel mit einer vorbestimmten Amplitude beschreibt, kleiner oder gleich 720 Grad, zwei vollständige Umdrehungen, und
- die kombinierten Rühr- und Stoppphasen zwischen 1 und 5 Mal pro Sekunde stattfinden,
die Betätigung der Paddel und/oder Schaufeln (2) ein wiederholtes Schlagen des Teigs oder der Emulsion während der Behandlung in jeder Rührphase bewirkt und die Menge des Teigs, die durch Zentrifugalkraft gegen die Wand des Behälters (1) geschleudert wird, minimiert.

2. Verfahren gemäß Anspruch 1, wobei die Amplitude des Rotationswinkels in jeder Rührphase zwischen Werten ausgewählt wird, die einen Bruchteil einer vollständigen Umdrehung oder eine vollständige Umdrehung plus einen Bruchteil einer Umdrehung umfassen.

3. Verfahren gemäß Anspruch 1, wobei der Motor ein Elektromotor (7) ist und die Steuerung des Motorbetriebs mittels eines Winkelpositionssensors (9), der die Position eines Elements (8) erfasst, das durch den Sensor (9) erfasst werden kann, der mittels der Betätigung des Motors mit einer Rotationswelle (6) verbunden ist, und einer Steuerschaltung (10), die eine Leistungsregelung des Elektromotors (7) in einem Bereich von 0 % bis 100 % während der Rührphase im Ansprechen auf die von dem erwähnten Winkelpositionssensor (9) empfangenen Signale bereitstellt, durchgeführt wird.

4. Verfahren gemäß Anspruch 1, wobei die Dauer der Rührphasen durch die von dem genannten Winkelpositionssensor (9) erfasste Position des Elements (8), das durch den Sensor erfasst werden kann, der mit der Welle (6) verbunden ist, bestimmt wird.

5. Verfahren gemäß Anspruch 1, wobei die Durchschnittsgeschwindigkeit der Paddel und/oder Schaufeln (2) zwischen 5 und 80 U/min umfasst.

6. Verfahren gemäß Anspruch 1, wobei die Amplitude des Rotationswinkels der Paddel und/oder Schaufeln (2) allen Rührphasen gemeinsam ist.

7. Verfahren gemäß Anspruch 1, wobei die Amplitude des Rotationswinkels der Paddel und/oder Schaufeln (2) allen Rührphasen gemeinsam ist und die Dauer der Stoppphasen ebenfalls gemeinsam ist.

8. Verfahren gemäß Anspruch 1, wobei die Amplitude des Rotationswinkels der Paddel und/oder Schaufeln (2) allen Rührphasen gemeinsam ist und die Dauer der Stoppphasen variabel ist.

9. Verfahren gemäß Anspruch 1, wobei die Amplitude des Rotationswinkels der Paddel und/oder Schaufeln (2) in allen Rührphasen variabel ist und die Dauer der Stoppphasen gemeinsam ist.

10. Verfahren gemäß Anspruch 1, wobei die Amplitude des Rotationswinkels der Paddel und/oder Schaufeln (2) in allen Rührphasen variabel ist und die Dauer der Stoppphasen ebenfalls variabel ist.

11. Verfahren gemäß Anspruch 1, wobei der Rührmotor ein Elektromotor (7) ist, der mit Wechselstrom betrieben wird, und die erwähnte Steuerung mittels einer Steuerschaltung (10) durchgeführt wird, die eine Halbleitervorrichtung vom TRIAC-Typ integriert.

12. Verfahren gemäß Anspruch 1, wobei der Rührmotor ein Elektromotor (7) ist, der mit Gleichstrom betrieben wird, und die erwähnte Steuerung mittels einer Steuerschaltung (10) durchgeführt wird, die eine Halbleitervorrichtung vom Leistungstransistor-Typ integriert.

13. Verfahren gemäß Anspruch 1, wobei die Dauer der Stoppphasen in Abhängigkeit von dem Strombedarf des Motors eingestellt wird.

14. Verfahren gemäß Anspruch 1, wobei der Teig oder die Nahrungsmittelemulsion während seiner/ihrer Behandlung durch Heizmittel (11) zum Erwärmen mindestens eines Teils des Bodens des Behälters (1) erwärmt wird.

## Revendications

1. Une méthode pour le traitement de pâte et d'émulsions d'aliments, qui comprend le mélange de la pâte ou l'émulsion dans un récipient (1) au moyen d'un appareil de mélange rotatoire pourvu d'un moulinet à pales et/ou des lames (2) attachées à un axe (3) relié à un moteur de mixeur, comportant des phases de mélange intermittent suivies de phases d'arrêt intermittent, où il comporte le contrôle du fonctionnement du moteur selon la position de ces pales et/ou lames (2), de sorte que :
- l'axe (3) portant ces pales et/ou lames (2) décrit dans chacune des phases de mélange un angle de rotation ayant une amplitude prédéfinie, inférieure ou égale à 720 degrés, deux tours complets, et
- les phases combinées de mélange et d'arrêt ont lieu entre 1 à 5 fois par seconde, l'action de ces pales et/ou lames (2) causant un battement répété de la pâte ou émulsion durant le traitement, dans chaque phase de mélange et en minimisant la quantité de pâte projetée contre la paroi du récipient (1) par la force centrifuge.

2. La méthode conformément à la revendication 1, où l'amplitude de l'angle de rotation dans chaque phase de mélange est sélectionnée parmi las valeurs comportant une fraction du tour complet ou un tour complet plus une fraction de tour.

3. La méthode conformément à la revendication 1, où ce moteur est un moteur électrique (7) et ce contrôle du fonctionnement du moteur est effectué au moyens d'un capteur de position angulaire (9) détectant la position d'un élément (8) pouvant être capté par le capteur (9), relié à un axe de rotation (6) au moyen de l'entraînement de ce moteur, et un circuit de contrôle (10) fournissant un réglage de puissance du moteur électrique (7) dans une plage de 0% à 100% durant cette phase de mélange en réponse aux signaux reçus dudit capteur de position angulaire (9).

4. La méthode conformément à la revendication 1, où la durée des phases de mélange est déterminée par la position détectée par ce capteur de positon angulaire (9) de l'élément (8) qui peut être perçue par le capteur, relié à l'axe (6).

5. La méthode conformément à la revendication 1, où la vitesse moyenne des pales et/ou lames (2) est comprise entre 5 et 80 tpm ;

6. La méthode conformément à la revendication 1, où l'amplitude de l'angle de rotation des pales et/ou lames (2) est commun dans toutes les phases de mélange.

7. La méthode conformément à la revendication 1, où l'amplitude de l'angle de rotation des pales et/ou lames (2) est commun dans toutes les phases de mélange et la durée des phases d'arrêt est également commune.

8. La méthode conformément à la revendication 1 où l'amplitude de l'angle de rotation des pales et/ou lames (2) est commun dans toutes les phases de mélange et la durée des phases d'arrêt est variable.

9. La méthode conformément à la revendication 1, où l'amplitude de l'angle de rotation des pales et/ou lames (2) est variable dans toutes les phases de mélange et la durée des phases d'arrêt est commune.

10. La méthode conformément à la revendication 1, où l'amplitude de l'angle de rotation des pales et/ou lames (2) est variable dans toutes les phases de mélange et la durée des phases d'arrêt est également variable.

11. La méthode conformément à la revendication 1, où ce moteur de mélange est un moteur électrique (7) alimenté par du courant alternatif et ce contrôle es effectué au moyen d'un circuit de contrôle (10) intégrant un dispositif semi-conducteur type TRIAC.

12. La méthode conformément à la revendication 1, où ce moteur de mélange est un moteur électrique (7) alimenté en courant continu et ce contrôle est effectué au moyen d'un circuit de contrôle (10) intégrant un dispositif semi-conducteur type transistor de puissance.

13. La méthode conformément à la revendication 1, où la durée de la phase d'arrêt est ajustée selon le courant consommé par le moteur.

14. La méthode conformément à la revendication 1, où de la chaleur est appliquée à l'émulsion de pâte ou aliment durant leur traitement par des moyens chauffants (11) pour chauffer au moins une portion du fond du récipient (1).
